# EUROPÄISCHE PATENTSCHRIFT

(11) **EP 3 161 311 B1**
(45) Veröffentlichungstag und Bekanntmachung des Hinweises auf die Patenterteilung: **30.09.2020**
(21) Anmeldenummer: 15750399.6
(22) Anmeldetag: 11.08.2015
(51) Int. Cl.: F03D 80/00, F03D 15/00, F03D 1/00, F16H 57/023, F16H 57/08, F03D 80/50, F03D 80/70

(54) **VERFAHREN ZUM AUSTAUSCH EINES WÄLZLAGERS UND VERFAHREN ZUM AXIALEN VERSCHIEBEN EINES WKA-GETRIEBES**
METHOD FOR THE EXCHANGE OF A ROLLING BEARING AND METHOD FOR AXIALLY DISPLACING A GEAR OF A WIND TURBINE
PROCÉDÉ DE REMPLACEMENT D'UN PALIER À ROULEMENT ET PROCÉDÉ DE DÉPLACEMENT AXIAL D'UN MÉCANISME DE TRANSMISSION D'ÉOLIENNE

(30) Priorität: 15.08.2014 DE 102014216244
(43) Veröffentlichungstag der Anmeldung: 03.05.2017
(73) Patentinhaber: Flender GmbH, 46395 Bocholt (DE)
(72) Erfinder: MARKOVIC, Thorsten, 46325 Borken (DE)
(74) Vertreter: Maier, Daniel Oliver
(86) Internationale Anmeldenummer: PCT/EP2015/068410
(87) Internationale Veröffentlichungsnummer: WO 2016/023880

(56) Entgegenhaltungen:
- EP-A2- 2 067 990
- WO-A1-2012/079575
- DE-A1-102011 006 665
- DE-A1-102011 122 432
- JP-A- 2014 003 865
- US-A1- 2010 009 799
- US-A1- 2012 131 786

## Beschreibung

Die Erfindung betrifft ein Verfahren zum Austausch eines Wälzlagers eines Getriebes in einer Gondel einer Windkraftanlage (= WKA).

EP 1617075 A1 (Eickhoff Maschinenfabrik GmbH) 18.01.2006 beschreibt ein Verfahren zum Getriebetausch bei einer WKA mithilfe eines Jochs.

EP 1677032 A1 (Eickhoff Maschinenfabrik GmbH) 05.07.2006 beschreibt ein Verfahren zum Austausch von Komponenten eines Umlaufrädergetriebes in einer WKA.

WO 2009/074859 A2 (Innovative Windpower AG) 18.06.2009 beschreibt eine Vorrichtung zur Montage eines Generators und/oder eines Getriebes in einem Maschinenhaus einer WKA, wobei die Vorrichtung wenigstens eine Führungsschiene und eine mittels der Führungsschiene geführte Transportvorrichtung umfasst und die Führungsschiene in dem Maschinenhaus einer Windenergieanlage verortet ist, wobei die Transportvorrichtung Mittel zur Aufnahme eines Transportgutes aufweist.

EP 2146090 A2 (REpower Systems AG) 20.01.2010 beschreibt ein Verfahren zum Demontieren eines Getriebes einer WKA, wobei in der Gondel eine Hebeeinrichtung oberhalb des mehrstufigen Getriebes errichtet wird.

US 2010/009799 A1 (Ciszak Robert John et al) 14. Januar 2010, welches als nächstliegender Stand der Technik angesehen wird, offenbart ein Verfahren zum Austausch eines Wälzlagers eines Planetenträgers eines Getriebes in einer Gondel einer WKA.

Der Erfindung liegt die Aufgabe zugrunde, ein verbessertes Verfahren zum Austausch eines Wälzlagers eines Getriebes in einer Gondel einer WKA anzugeben.

Die Aufgabe wird gelöst durch ein Verfahren nach Anspruch 1.

Das Verfahren zum Austausch eines Wälzlagers eines Planetenträgers eines Getriebes in einer Gondel einer Windkraftanlage umfasst folgende Schritte:
- Demontage eines das Wälzlager abdeckenden Lagerdeckels;
- Einschneiden eines Innenrings des Wälzlagers und Entfernen eines Teils eines Lagerbords des Innenrings;
- Einschneiden eines Außenrings des Lagers und Entfernen eines Teils des eines Lagerbords des Außenrings;
- Entfernen von Wälzkörpern des Wälzlagers, wobei Wälzkörper im bodennahen Bereich des Lagers im Lager verbleiben, um den Planetenträger zu zentrieren;
- Verbinden von Zugvorrichtungen, insbesondere Zugbolzen, mit dem Wälzlager;
- Justierung des Planetenträgers, um die im bodennahen Bereich des Wälzlagers im Lager verbliebenen Wälzkörper zu entlasten;
- Installation von Positionshaltern, um den Planetenträger axial in seiner Position zu fixieren;
- Installation von Abstützelementen, insbesondere Abstützböcken, am Getriebegehäuse, insbesondere an den Gewindebohrungen des Lagerdeckels;
- Ziehen an den Zugvorrichtungen, während eines Abstützens am Abstützelement;
- Demontage des Lagers vom Planetenträger;
- Demontage der Abstützelemente;
- Aufschieben des neuen Wälzlagers auf den Planetenträger, bis kurz vor dem endgültigen Lagersitz;
- Montage der Abstützelemente;
- Zentrieren des Lagers; und
- Verwendung der Abstützelemente, analog wie im oben angegebenen Ziehvorgang, zum Drücken des Lagers in seinen endgültigen Lagersitz.

Ein nicht erfindungsgemäßes Verfahren zum axialen Verschieben eines WKA-Getriebes umfasst folgende Schritte:
- Demontage der Getriebelagerung des WKA-Getriebes;
- Positionieren des WKA-Getriebes relativ zur Gondel;
- Lösen der Verbindung zwischen einer Drehmomentabstützung des WKA-Getriebes und der Gondel;
- Installation von in axialer Richtung verlaufenden Führungsschienen, insbesondere auf beiden Seiten des WKA-Getriebes;
- Verbinden von Montagewagen mit dem Getriebegehäuse des WKA-Getriebes;
- Justieren des Abstands zwischen Führungsschienen und den Montagewagen so, dass die Montagewagen von den Führungsschienen geführt werden; und
- Verschieben des WKA-Getriebes.

Vorteilhafte Weiterbildungen des Verfahrens zum Wälzlageraustausch sind in den abhängigen Ansprüchen beschrieben.

Das Verfahren zum Austausch eines Wälzlagers eines Getriebes kann zum Tausch eines Lagers eines Planetenträgers eines Planetengetriebes genutzt werden, welches in einer Gondel einer WKA im Triebstrang zwischen einem Windrotor und einem Generator angeordnet ist. Das Verfahren zum axialen Verschieben eines WKA-Getriebes kann zum axialen Bewegen des Getriebes in Richtung zu dem Generator genutzt werden.

Das Lager ist als ein Wälzlager ausgebildet. Beispielsweise kann es sich um ein Kugel-, Zylinderrollen-, KegelrollenLager handeln. Vorzugsweise handelt es sich bei dem Lager um das rotorseitige Lager des Planetenträgers.

Das Verfahren zum Austausch eines Wälzlagers kann folgende Schritte aufweisen:
A1. Demontage des Lagerdeckels (Disassembly of the cover).
A2. Vorteilhaft: Ausfüllen des Raums zwischen den Wälzkörpern mit Schmiermittel (Fill-up the space between the rollers with grease). Das Schmiermittel verhindert, dass unerwünschte Partikel in das Innere des Getriebes gelangen.
A3. Einschneiden des Innenrings des Lagers. Brechen des Lagerbords. (Cutting in the inner ring of the bearing. Breaking off the bearing shoulder.)
A4. Einschneiden des Außenrings des Lagers. Brechen des Lagerbords. (Cutting in the outer ring of the bearing. Breaking off the bearing shoulder.)
A5. Entfernen der Wälzkörper, wobei Wälzkörper im bodennahen Bereich des Lagers im Lager verbleiben, um den Planetenträger zu zentrieren. (Removing of the rollers. The rollers at the bottom side remain in the bearing to centering planet carrier). Der Boden ist der Gondelboden.
A6. Montage von Zugvorrichtungen (Assembly of the pulling blocks.). Die Zugvorrichtungen können als Zugbolzen ausgebildet sein. Vorzugsweise werden die Zugbolzen in den Zwischenraum zwischen den Außen- und Innenring des Lagers eingesetzt. Der Zugbolzen hat an einem axialen Ende ein Gewinde, sein entgegengesetztes axiales Ende hat eine ähnliche Geometrie wie die der Wälzkörper.
A7. Justierung des Planetenträgers, um die im bodennahen Bereich des Lagers im Lager verbliebenen Wälzkörper zu entlasten. Installation von Positionshaltern, z.B. durch Gewindebohrungen im Inspektionsdeckel, um den Planetenträger axial in seiner Position zu fixieren. Installation von Abstützelementen am Getriebegehäuse, insbesondere an den Gewindebohrungen des Lagerdeckels. Die Abstützelemente können als Abstützböcke ausgebildet sein. Ziehen an den Zugbolzen, während eines Abstützens am Abstützbock; dies erzeugt eine axiale Relativbewegung des Wälzlagers zum Getriebegehäuse, und damit auch zum Planetenträger; dies kann mittels einer mit dem Zugbolzen verschraubten Gewindestange erfolgen, die durch eine Bohrung im Abstützbock geführt ist; dies kann mittels eines Hydraulikzylinders erfolgen. (Adjustment of the planet carrier to unload the rollers at the bottom side of the bearing. Axial fixing of the position of the planet carrier. Installation of the pulling brackets.)
A8. Demontage des Lagers vom Planetenträger. (Disassembly of the bearing.)
A9. Demontage der Abstützelemente. Aufschieben des neuen Wälzlagers auf den Planetenträger, bis kurz vor dem endgültigen Lagersitz. Montage der Abstützelemente.
A10. Zentrieren des Lagers. (Centering of the bearing and installation of the pushing device.)
A11. Verwendung der Abstützelemente, analog wie im oben angegebenen Ziehvorgang, zum Drücken des Lagers in seinen endgültigen Lagersitz. (Installation of the pushing device. Pushing back the bearing.) Vorzugsweise wird der Druck auf das Lager mittels einer druckverteilenden Vorrichtung, z.B. einer Platte, übertragen. Dabei kann die Platte so ausgeführt sein, dass der Wälzlager-Innenring axial weiter geschoben wird als der Wälzlager-Außenring, um eine sichere Anlage am Anlagebund des Lagersitzes zu gewährleisten. Der Außenring wird in diesem Fall in seine endgültige Position durch den Lagerdeckel gebracht.
A12. Überprüfen der Position des Lagers. (Checking of the position of the bearing.)

Das Verfahren zum axialen Verschieben eines WKA-Getriebes kann folgende Schritte aufweisen:
B1. Demontage der Getriebelagerung (Disassembly of the rubber blocks). Durch die Getriebelagerung ist das Getriebe mit der Gondel verbunden; dabei dient die Getriebelagerung als Drehmomentabstützung.
B2. Positionieren des Getriebes relativ zur Gondel. Lösen der Verbindung zwischen der Drehmomentabstützung und der Gondel. Durch das Positionieren soll verhindert werden, dass sich das Getriebe nach dem Lösen der Verbindung relativ zur Gondel bewegt.
B3. Installation von in axialer Richtung verlaufenden Führungsschienen, insbesondere auf beiden Seiten des Getriebes. Die Führungsschienen können in x-, y- und z-Richtung eingestellt werden. (Lift up the torque arm to install the guiding rails by a machine lifting device. The guiding rails can be adjusted in all three directions.). Vorzugsweise werden die Führungsschienen an einem Maschinenträger installiert, der sich in der Gondel befindet. Vorzugsweise umfassen die Führungsschienen auf jeder Seite jeweils eine erste und eine zweite Führungsschiene, die jeweils einen Montagewagen führen. Vorzugsweise wird das Getriebegehäuse mithilfe von vier Montagewagen auf den Schienen geführt. Dabei sind jeweils zwei Wagen an beiden axialen Enden des Getriebegehäuses angeordnet, davon auf jeder Seite einer.
B4. Verbinden von Montagewagen (Wälzwagen) mit dem Getriebegehäuse.
B5. Justieren des Abstands zwischen Führungsschienen und den Montagewagen so, dass die Montagewagen von den Führungsschienen geführt werden.
B6. Verschieben des Getriebes. Vorzugsweise wird das Getriebe in Richtung des Generators verschoben. Dabei wird die Verbindung zwischen dem Planetenträger und der in einem Rotorwellenlager gelagerten Rotorwelle gelöst. Vorzugsweise wird die Position des Getriebes nach dem Verschieben gesichert.

Die Idee beruht auf einem Verschieben eines Getriebes in Richtung des Generators mithilfe von Montagewagen auf beidseitig des Getriebes angebrachten Führungsschienen. Der geschaffene Freiraum zwischen Getriebe und Rotorwelle kann dann zum Austausch einzelner Komponenten genutzt werden.

Im Folgenden wird die Erfindung anhand mehrerer Ausführungsbeispiele unter Zuhilfenahme der Zeichnung erläutert. Es zeigt jeweils schematisch und nicht maßstabsgetreu
- Fig. 1: das Getriebe vor einem nicht erfindungsgemäßen Verschieben;
- Fig. 2: das Getriebe nach einem nicht erfindungsgemäßen Verschieben;
- Fig. 3: einen Zugbolzen, welcher in den Zwischenraum zwischen den Lagerringen eingesetzt ist; und
- Fig. 4: einen Schnitt eines Wälzlagers.

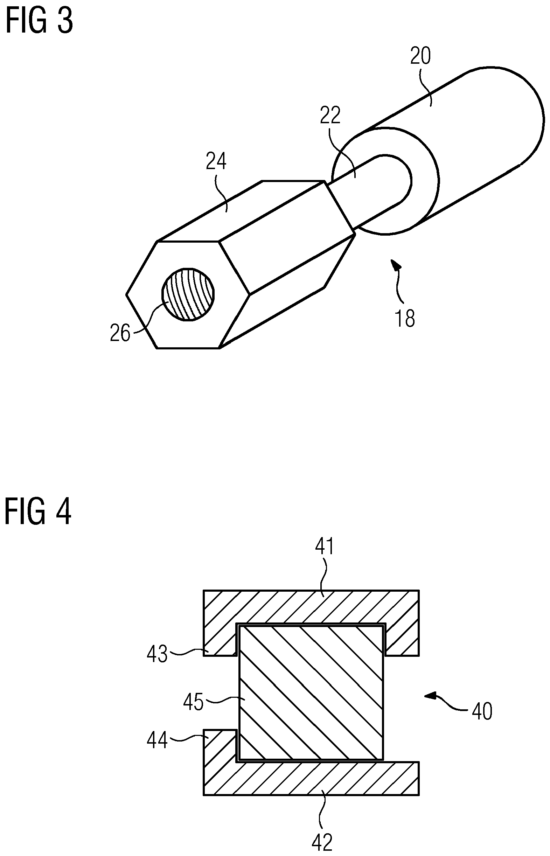

Zu Schritt A1: Die Demontage des Lagerdeckels dient dazu, das Wälzlager, in dem die Antriebswelle des Planetengetriebes vorzugsweise rotorseitig gelagert ist, freizulegen. Fig. 4 zeigt einen axialen Schnitt durch ein herkömmliches Wälzlager 40, hier: eines einreihigen Radialzylinderrollenlagers, umfassend einen radial äußeren Lagerring 41, einen radial inneren Lagerring 42 und mehrere zwischen den Lagerringen 41, 42 angeordnete Wälzkörper 45, hier: Zylinderrollen. Dabei haben beiden Lagerringe 41, 42 an mindestens einer Stirnseite ein Bord 43, 44.

Nach einem Lösen von Haltebolzen, die durch in dem Lagerdeckel angeordnete Durchgangsbohrungen, welche über den Umfang des Lagerdeckels verteilt sind, hindurch gesteckt und in Gewindelöcher in dem Getriebegehäuse eingeschraubt sind, kann der die Antriebswelle umgebende Lagerdeckel von dem Getriebegehäuse abgenommen werden. Dabei kann die Antriebswelle als eine Hohlwelle ausgebildet sein, die mittels einer Spannvorrichtung mit der Rotorwelle verbunden ist. Nach der Demontage des Lagerdeckels sind die Wälzkörper sichtbar, welche in der Regel zwischen einem Lagerinnen- und einem Lageraußenring sitzen. Nach der Demontage des Lagerdeckels sind die Lagerborde von Lagerinnen- und einem Lageraußenring und die Stirnseiten der Wälzkörper sichtbar.

Zu Schritt A2: Dieser Schritt ist optional: durch Einstreichen von Schmiermittel in die Zwischenräume der Wälzkörper kann verhindert werden, dass unerwünschte Partikel in das Innere des Getriebes gelangen. Das Ausfüllen des Raums zwischen den Wälzkörpern mit Schmiermittel kann mit einem Finger oder mit einem Pinsel, einer Spachtel oder einem ähnlichen Werkzeug erfolgen, welches in den Spalt zwischen den Lagerborden am Außen- und Innenring des Wälzlagers gelangt. Zwischen die beiden Lagerborde der Lagerringe aufgetragenes Schmiermittel kann mit einem Finger oder einem Werkzeug in die Hohlräume zwischen den Wälzkörpern eingestrichen werden.

Zu Schritt A3: Zunächst kann der Lagerbord des Innenrings an einer vertikal oberen Stelle des Wälzlagers keilförmig eingeschnitten werden, z.B. mittels eines Winkelschleifers, so dass ein Abschnitt des Lagerbords, der mindestens eine Stirnfläche eines Wälzkörpers überdeckt, lösbar wird. Danach kann mit einem Werkzeug, z.B. mittels Hammer und Meißel, der eingeschnittene Abschnitt vollständig vom Innenbord gelöst (= Brechen) und entfernt werden. Es ist auch möglich, dass bereits nach dem Einschneiden des Lagerbords der Abschnitt entfernbar ist, so dass der separate Schritt des Brechens nicht durchgeführt zu werden braucht.

Zu Schritt A4: Dieselben Aktionen wie in Schritt A3, d.h. Einschneiden und ggf. Brechen, werden in Bezug auf den Außenbord durchgeführt, und zwar gegenüber dem gelösten und entfernten Abschnitt des Innenbords, so dass in dem freigelegten Abschnitt des Wälzlagers, an dem sowohl Innen- als auch Au-βenbord entfernt wurden, die Stirnfläche zumindest eines Wälzkörpers vollständig sichtbar ist.

Die Abfolge der Schritte A3 und A4 kann auch vertauscht werden.

Zu Schritt A5: Über den freigelegten Abschnitt des Wälzlagers, an dem sowohl der Innen- als auch der Außenbord entfernt wurden, können nun die Mehrzahl der Wälzkörper des Wälzlagers entfernt werden. Dazu können die Wälzkörper mit einem Werkzeug, z.B. einem Schraubendreher, zwischen den Lagerringen bis zu dem freigelegten Abschnitt geschoben und dort aus dem Hohlraum zwischen den Lagerringen entfernt werden. Dabei wird sichergestellt, dass mehrere Wälzkörper, z.B. 10 bis 12 Wälzkörper, im bodennahen Bereich des Lagers, insbesondere im Bereich von ca. 5 bis 7 Uhr, im Lager verbleiben, um den Planetenträger innerhalb des Lagers zentriert in Position zu halten, d.h. damit der Planetenträger nicht nach unten absackt. Durch die zentrierte Position des Planetenträgers bleibt über den gesamten Umfang des Lagers ein konstanter Abstand zwischen den Innen- und dem Außenring erhalten; somit können Einsatzkörper von Zugbolzen im Zwischenraum zwischen dem Innen- und dem Außenring verschoben werden. Die Wälzkörper werden zur Demontage des alten Lagers entlastet, verbleiben aber bei der Demontage im Bodenbereich.

Zu Schritt A6: Die Zugbolzen 18 umfassen einen Einsatzkörper 20 sowie einen Zugkörper 24. Ein derartiger Zugbolzen 18 ist in Fig. 3 dargestellt. Der Einsatzkörper 20 kann die Form eines Wälzkörpers haben, z.B. einer Zylinderrolle. Mit dem Einsatzkörper 20 über einen dünneren Verbindungskörper 22, dessen Durchmesser kleiner ist als der lichte Abstand zwischen dem Innen- und dem Außenring des Planetenträgerlagers, axial verbunden ist der Zugkörper 24, hier in Form einer Schraubenmutter, z.B. einer Sechskantmutter, mit einem Innengewinde 26.

Der Einsatzkörper 20 wird in den Zwischenraum zwischen den Außen- und Innenring des Lagers eingeführt, und zwar über den in den Schritten A3 und A4 freigelegten Abschnitt. Von dort wird der Einsatzkörper 20 zwischen den Außen- und Innenring des Lagers soweit verschoben, bis seine Stirnseite an den beiden Borden der Lagerringe anliegt. Der Verbindungskörper 22 sitzt dann zwischen den Lagerborden. Der Zugkörper 24 dagegen sitzt in axialer Richtung vor den Lagerringen, d.h. au-βerhalb des Lagers. Es können mehrere, vorzugsweise vier, Zugbolzen 18 in das Lager eingeführt und gleichmäßig über den Umfang des Lagers verteilt werden. Eine Zug- bzw. Druckkraft greift jeweils an dem Zugkörper 24 an, z.B. indem man eine Zug- bzw. Druckstange in das Gewinde 26 des Zugkörpers einschraubt.

Zu Schritt A7: Die Lager des Planetenträgers wird so verändert, z.B. durch Anheben und/oder Absenken, dass eine Justierung des Planetenträgers, d.h. eine Zentrierung des Planetenträgers im Planetenträgerlager, in einer Weise erreicht wird, dass die im bodennahen Bereich des Lagers verbliebenen Wälzkörper entlastet werden. Es werden Positionshalter installiert, z.B. durch Montage der Positionshalter in Gewindebohrungen in einem Bauteil des Getriebegehäuses, z.B. im Inspektionsdeckel, um den Planetenträger radial und axial in seiner Position zu fixieren. Zusätzlich werden Abstützböcke am Getriebegehäuse installiert, insbesondere an den Gewindebohrungen des Lagerdeckels. Durch Abstützen an den Abstützbocken kann ein Zug auf die Zugbolzen 18 ausgeübt werden; dies erzeugt eine axiale Relativbewegung des Wälzlagers zum Getriebegehäuse, und damit auch zum Planetenträger; dies kann jeweils mittels einer mit den Zugbolzen verschraubten Gewindestange erfolgen, die durch eine Bohrung im Abstützbock geführt ist; dies kann mittels eines Hydraulikzylinders erfolgen.

Zu Schritt A9: Die Abstützböcke müssen vom Getriebegehäuse demontiert werden, um ein Aufschieben des neuen Wälzlagers auf den Planetenträger, bis kurz vor dem endgültigen Lagersitz, zu ermöglichen. Danach werden die Abstützböcke wieder am Getriebegehäuse montiert.

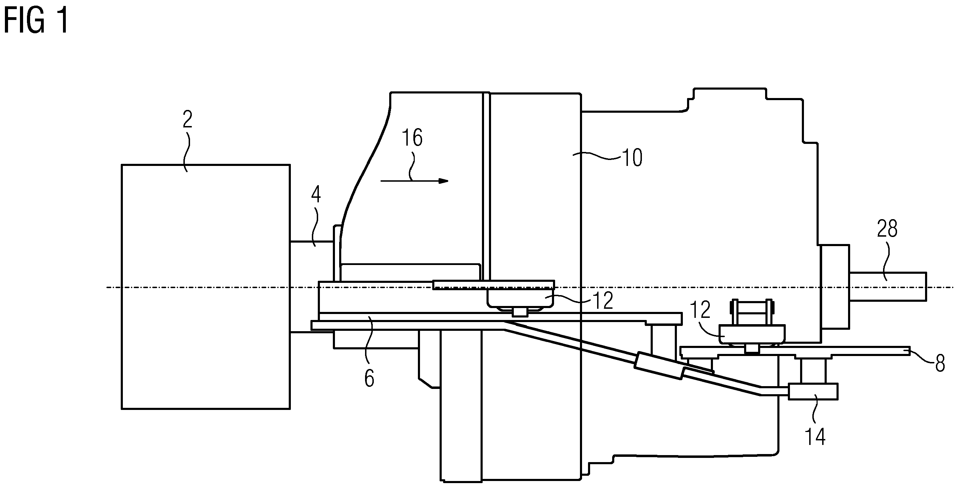

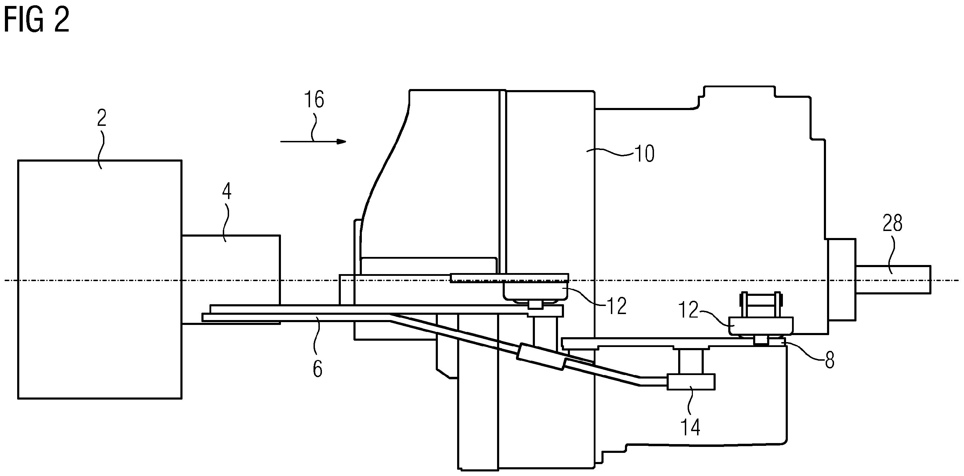

Fig. 1 und Fig. 2 illustrieren ein Ausführungsbeispiel des nicht erfindungsgemäßen Verfahrens zum axialen Verschieben eines WKA-Getriebes. Dabei zeigt Fig. 1 das Getriebe vor dem Verschieben und Fig. 2 das Getriebe nach dem Verschieben.

Zu Schritt B1: Zunächst wird die Getriebelagerung, wodurch das Getriebe 10 mit der Gondel verbunden ist, demontiert; die Getriebelagerung kann beispielsweise eine Lagerung in Gummiblöcken umfassen. Es ist möglich, dass die Getriebelagerung zugleich als Drehmomentabstützung dient.

Zu Schritt B2: Die Position des Getriebes 10 relativ zur Gondel wird gesichert, d.h. fixiert; durch das Positionieren soll verhindert werden, dass sich das Getriebe 10 nach dem Lösen der Verbindung zwischen der Drehmomentabstützung und der Gondel relativ zur Gondel bewegt. Danach kann die Verbindung zwischen der Drehmomentabstützung und der Gondel gelöst werden. Falls die Getriebelagerung zugleich als Drehmomentabstützung dient, muss die Fixierung des Getriebes 10 bereits vor dem Schritt B1 erfolgen.

Zu Schritt B3: Es werden in axialer Richtung verlaufende Führungsschienen 6, 8 zur Führung des Getriebes installiert, auf beiden Seiten des Getriebes 10. Dazu kann es nötig sein, den Drehmomentarm anzuheben. Die Führungsschienen 6, 8 können in x-, y- und z-Richtung eingestellt werden. Die Führungsschienen 6, 8 können dabei an einem Maschinenträger 14 installiert, der sich in der Gondel befindet. Die Führungsschienen 6, 8 umfassen auf jeder Seite jeweils eine erste 6 und eine zweite Führungsschiene 8, die jeweils einen Montagewagen 12 führen. Das Getriebegehäuse 10 wird mithilfe von vier Montagewagen 12 auf den Schienen 6, 8 geführt. Dabei sind jeweils zwei Wagen 12 an beiden axialen Enden des Getriebegehäuses 10 angeordnet, davon auf jeder Seite einer.

Zu Schritt B4: Der mindestens eine Montagewagen 12 (Wälzwagen) wird mit dem Getriebegehäuse 10 verbunden.

Zu Schritt B5: Der Abstand zwischen Führungsschienen 6, 8 und dem mindestens einen Montagewagen 12 wird so eingestellt, dass die Montagewagen 12 von den Führungsschienen 6, 8 geführt werden.

Zu Schritt B6: Nun kann das Getriebe 10 verschoben werden. Dabei wird das Getriebe 10 von einem Rotorwellenlager 2 weg, d.h. in Richtung 16 eines Generators, der auf einer abtriebseitigen Seite des Getriebes 19 angeordnet ist und mit einer Abtriebswelle 28 des Getriebes 10 verbindbar ist, verschoben. Dazu wird die Verbindung zwischen dem Planetenträger und der in dem Rotorwellenlager 2 gelagerten Rotorwelle 4 gelöst. Vorzugsweise wird die Position des Getriebes 10 nach dem Verschieben gesichert.

## Patentansprüche

1. Verfahren zum Austausch eines Wälzlagers eines Planetenträgers eines Getriebes in einer Gondel einer Windkraftanlage, umfassend folgende Schritte:
- Demontage eines das Wälzlager abdeckenden Lagerdeckels;
- Einschneiden eines Innenrings des Wälzlagers und Entfernen eines Teils eines Lagerbords des Innenrings;
- Einschneiden eines Außenrings des Lagers und Entfernen eines Teils des eines Lagerbords des Außenrings;
- Entfernen von Wälzkörpern des Wälzlagers, wobei Wälzkörper im bodennahen Bereich des Lagers im Lager verbleiben, um den Planetenträger zu zentrieren;
- Verbinden von Zugvorrichtungen mit dem Wälzlager;
- Justierung des Planetenträgers, um die im bodennahen Bereich des Wälzlagers im Lager verbliebenen Wälzkörper zu entlasten;
- Installation von Positionshaltern, um den Planetenträger axial in seiner Position zu fixieren;
- Installation von Abstützelementen am Getriebegehäuse, insbesondere an den Gewindebohrungen des Lagerdeckels;
- Ziehen an den Zugvorrichtungen, während eines Abstützens am Abstützelement;
- Demontage des Lagers vom Planetenträger;
- Demontage der Abstützelemente;
- Aufschieben des neuen Wälzlagers auf den Planetenträger, bis kurz vor dem endgültigen Lagersitz;
- Montage der Abstützelemente;
- Zentrieren des Lagers; und
- Verwendung der Abstützelemente, analog wie im oben angegebenen Ziehvorgang, zum Drücken des Lagers in seinen endgültigen Lagersitz.

2. Verfahren nach Anspruch 1, weiter umfassend: Ausfüllen des Raums zwischen den Wälzkörpern mit Schmiermittel vor dem Einschneiden der Ringe.

3. Verfahren nach einem der vorhergehenden Ansprüche, weiter umfassend: Einsetzen der Zugvorrichtungen in den Zwischenraum zwischen den Außen- und Innenring des Lagers.

4. Verfahren nach einem der vorhergehenden Ansprüche, weiter umfassend: Übertragen des Druck auf das Lager mittels einer druckverteilenden Vorrichtung.

5. Verfahren nach einem der vorhergehenden Ansprüche, weiter umfassend: Überprüfen der Position des Lagers nach dem Einbau.

## Claims

1. Method for replacing a roller bearing of a planetary carrier of a gear unit in a nacelle of a wind turbine, comprising the following steps:
- disassembling a bearing cover which covers the roller bearing;
- cutting into an inner ring of the roller bearing and removing a part of a bearing shoulder of the inner ring;
- cutting into an outer ring of the bearing and removing a part of the one bearing shoulder of the outer ring;
- removing rolling elements of the roller bearing, wherein rolling elements in the region of the bearing close to the ground remain in the bearing, in order to centre the planetary carrier;
- connecting pulling apparatuses to the roller bearing;
- adjusting the planetary carrier, in order to unload the rolling elements remaining in the bearing in the region of the roller bearing close to the ground;
- installing position retainers, in order to fix the planetary carrier in its position axially;
- installing brace elements on the gear unit housing, in particular on the threaded holes of the bearing cover;
- pulling on the pulling apparatuses, while bracing against the brace element;
- disassembling the bearing from the planetary carrier;
- disassembling the brace elements;
- sliding the new roller bearing onto the planetary carrier, up to just before the final bearing seat;
- assembling the brace elements;
- centring the bearing; and
- using the brace elements, in the same manner as the pulling procedure indicated above, to push the bearing into its final bearing seat.

2. Method according to claim 1, further comprising: filling up the space between the rolling elements with lubricant, before cutting into the rings.

3. Method according to one of the preceding claims, further comprising: inserting the pulling apparatuses into the intermediate space between the outer and inner ring of the bearing.

4. Method according to one of the preceding claims, further comprising: transferring the pressure onto the bearing by means of a pressure-distributing apparatus.

5. Method according to one of the preceding claims, further comprising: checking the position of the bearing after the installation.

## Revendications

1. Procédé de remplacement d'un palier à roulement d'une cage de transmission planétaire d'une transmission dans une gondole d'une éolienne, comprenant les stades suivants :
- on démonte un couvercle de palier recouvrant le palier à roulement ;
- on entaille un anneau intérieur du palier à roulement et on retire une partie d'un bord de palier de l'anneau intérieur ;
- on entaille un anneau extérieur du palier et on retire une partie du un bord de palier de l'anneau extérieur ;
- on retire des corps de roulement du palier à roulement, des corps de roulement restant dans le palier dans la région proche du fond du palier, afin de centrer la cage de transmission planétaire ;
- on relie des systèmes de traction au palier à roulement ;
- on ajuste la cage de transmission planétaire, afin de soulager les corps de roulement, qui sont restés dans la région proche du fond du palier de roulement ;
- on monte des mainteneurs de position pour immobiliser la cage de transmission planétaire axialement en sa position ;
- on monte des élément d'appui sur le carter de la transmission, notamment sur les taraudages du couvercle du palier ;
- on tire sur les systèmes de traction pendant un appui sur l'élément d'appui ;
- on démonte le palier de la cage de transmission planétaire ;
- on démonte les éléments d'appui ;
- on fait glisser le nouveau palier à roulement sur la cage de transmission planétaire jusque peu avant le siège définitif du palier ;
- on monte les élément d'appui ;
- on centre le palier ; et
- on utilise les éléments d'appui, d'une manière analogue à l'opération de traction indiquée ci-dessus, pour pousser le palier dans sa position de palier définitive.

2. Procédé suivant la revendication 1, comprenant, en outre : le remplissage de l'espace entre les corps de roulement par du lubrifiant avant l'entaillage des anneaux.

3. Procédé suivant l'une des revendications précédentes, comprenant, en outre : l'insertion des systèmes de traction dans l'espace intermédiaire entre l'anneau extérieur et l'anneau intérieur du palier.

4. Procédé suivant l'une des revendications précédentes, comprenant, en outre : la transmission de la pression au palier au moyen d'un système de répartition de la pression.

5. Procédé suivant l'une des revendications précédentes, comprenant, en outre : le contrôle de la position du palier après le montage.
